# EUROPÄISCHE PATENTANMELDUNG

(11) **EP 1 375 271 A2**
(43) Veröffentlichungstag der Anmeldung: **02.01.2004**
(21) Anmeldenummer: 03002360.0
(22) Anmeldetag: 04.02.2003
(51) Int. Cl.: B60S 1/08

(54) **Scheibenwischvorrichtung, insbesondere für ein Kraftfahrzeug**

(30) Priorität: 27.06.2002 DE 10228904
(71) Anmelder: ROBERT BOSCH GMBH, 70442 Stuttgart (DE)
(72) Erfinder: Gille, Andreas, 77815 Buehl (DE); Braun, Peter, 77830 Buehlertal (DE); May, Michael, 77654 Offenburg (DE); Eckert, Klaus, 77770 Durbach Ebersweier (DE); Neubauer, Mario, 76473 Iffezheim (DE); Boekenkamp, Ekkehard, 76133 Karlsruhe (DE); Fabing, Edgard, 67240 Schirrhoffen (FR)

(57) **Zusammenfassung**

Scheibenwischvorrichtung, insbesondere für ein Kraftfahrzeug, mit mindestens einem zwischen zwei Endpositionen pendelbar gelagerten Wischer (12), der von einem, insbesondere elektronisch, reversierbaren Elektromotor (20) antreibbar ist, derart, daß der von den beiden Endpositionen des Wischers (12) eingeschlossene Pendelwinkel (16) von Reversierpositionen (38, 40) des Elektromotors bestimmt ist, wobei mindestens eine Reversierposition (38, 40) des Elektromotors (20), verschleißabhängig steuerbar ist.

## Beschreibung

### Stand der Technik

Die Erfindung betrifft eine Scheibenwischvorrichtung, insbesondere für ein Kraftfahrzeug nach Gattung des unabhängigen Anspruchs.

Es sind schon Scheibenwischvorrichtungen für Kraftfahrzeuge mit steuerbaren Wischern bekannt, beispielsweise aus der DE 100 24 255 A1, bei denen die Reversierpositionen der Wischer in Abhängigkeit der Fahrzeuggeschwindigkeit gesteuert wird.

### Vorteile der Erfindung

Die erfindungsgemäße Scheibenwischvorrichtung mit den Merkmalen des Hauptanspruchs hat den Vorteil, daß die Umkehrlagen oder Endpositionen des Wischers über die gesamte Lebensdauer der Scheibenwischvorrichtung hinweg konstant gehalten werden. Dies wird dadurch erzielt, daß die Verschleißerscheinungen im Gestänge und in den Lagern des Wischsystems durch eine Veränderung der Umkehrpunkte des Wischermotors ausgeglichen werden.

Ohne einen externen Sensor, wie beispielsweise einen Positionssensor, kann das vorgeschriebene Wischfeld somit genau eingehalten werden.

Durch die in den Unteransprüchen aufgeführten Maßnahmen ergeben sich vorteilhafte Weiterbildungen und Verbesserungen der im Hauptanspruch angegebenen Merkmale.

Besonders vorteilhaft ist, wenn die Scheibenwischvorrichtung eine Speichereinrichtung aufweist, in der die Reversierpositionen, beispielsweise tabellenartig in Abhängigkeit der Anzahl der bereits durchgeführten Wischzyklen beziehungsweise Lastwechseln abgelegt sind. Auf diese Weise sind die Reversierpositionen einfach und schnell in die Scheibenwischeinrichtung zu implementieren.

Gleichfalls ist es vorteilhaft, wenn die Scheibenwischvorrichtung einen Zeitmesser aufweist und die Reversierpositionen des Elektromotors mit Hilfe der durch den Zeitmesser bestimmten Lebensdauer oder Betriebsdauer festlegbar sind. So können auch komplexere Algorithmen zur Steuerung der Reversierpositionen in Abhängigkeit der Lebensdauer und/oder der Anzahl der Wischzyklen implementiert werden.

Ferner ist es von Vorteil, wenn die Scheibenwischvorrichtung eine bei fehlender Verschleißinformation automatisch auslösbare Notbetriebsstufe aufweist, in der die Reversierpositionen fest vorgegeben sind. Bei Defekten in der Steuereinrichtung kann auf diese Weise immer ein ausreichend großes Wischfeld gewährleistet werden.

Wird die Wischstufe und damit die Geschwindigkeit der Wischer bei der Steuerung der Reversierposition berücksichtigt, so wird das Wischfeld noch genauer eingehalten, da das Überschwingen des Wischers bei höherer Wischergeschwindigkeit größer ist.

Eine weiterer Vorteil kann durch eine Berücksichtigung der Fahrzeuggeschwindigkeit bei der Festlegung der Reversierpositionen erzielt werden.

Weiterhin ist es vorteilhaft, wenn die Scheibenwischvorrichtung einen Regensensor aufweist, da auf diese Weise die Scheibenwischvorrichtung auch in Abhängigkeit eines Feuchtigkeitssignals gesteuert werden kann, um immer ein optimales Reinigungsergebnis zu erzielen.

### Zeichnungen

Ein Ausführungsbeispiel der Erfindung ist in den Zeichnungen dargestellt und in der nachfolgenden Beschreibung näher erläutert.

Es zeigen
Fig. 1a und 1b eine Windschutzscheibe eines Kraftfahrzeugs mit zwei Wischern in schematischer Darstellung,
Fig. 2a, 2b eine Seite eines Gestänge einer erfindungsgemäßen Scheibenwischvorrichtung in schematischer Darstellung.
Fig. 2c ein Diagramm in dem die Motorspannung über der Zeit t aufgetragen ist,
Fig. 3 eine erfindungsgemäße Scheibenwischvorrichtung in schematischer Darstellung.

### Beschreibung des Ausführungsbeispiels

In Fig. 1a ist eine Windschutzscheibe 10 mit dem vorgesehenen Sichtfeld 11 und zwei Wischern 12 dargestellt, welche sich in der unteren Endposition befinden. Im Betrieb pendeln die Wischer 12 zwischen der unteren Endposition und der oberen Endposition 14 um die Wischerachsen 30. Die Wischer 12 und schließen zwischen oberer- und unterer Endposition einen Pendelwinkel 16 ein.

Durch die Bewegung des Fahrzeugs ergibt sich während des Betriebes eine Windströmung über die Windschutzscheibe 10, welche durch die Strömungspfeile 18 angedeutet ist. Durch diese Windströmung werden die Wischer 12 bei höheren Fahrzeuggeschwindigkeiten immer weiter nach oben gedrückt. Die untere Endposition der Wischer 12 wird daher bei höheren Geschwindigkeiten des Fahrzeugs nach oben verschoben. Dies ist auf die Elastizitäten und auf die Lagerspiele der Mechanik der Scheibenwischvorrichtung zurückzuführen. Die Lagerspiele erhöhen sich mit fortschreitender Betriebsdauer, insbesondere mit der daraus resultierenden Anzahl durchgeführter Lastwechsel.

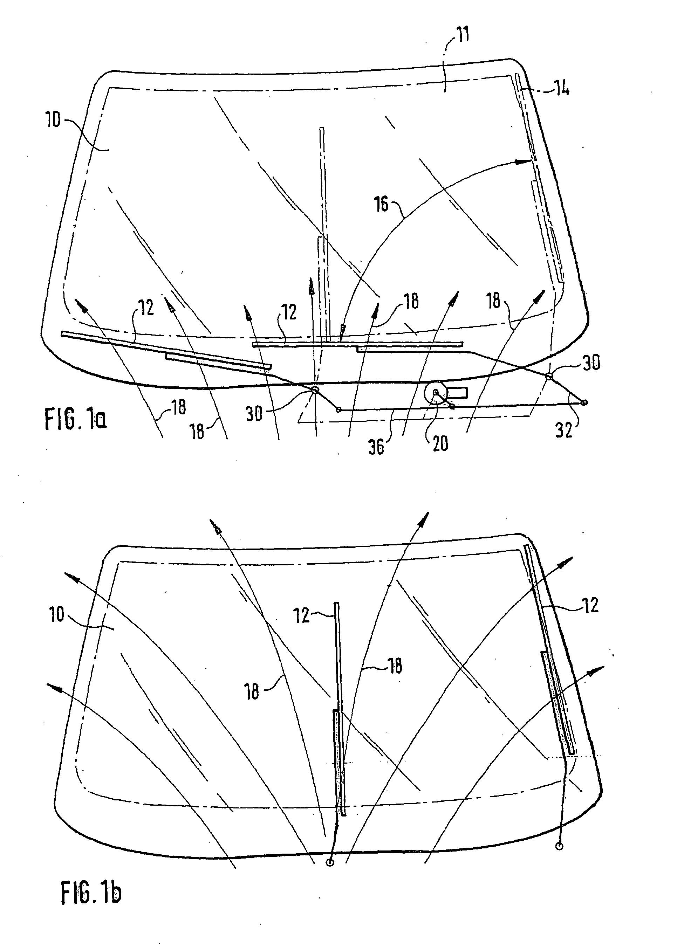

In Fig. 1b ist ebenfalls eine Windschutzscheibe 10 mit zwei Wischern 12 dargestellt, wobei sich die beiden Wischer 12 in der oberen Endposition befinden. Die Windströmung auf der Windschutzscheibe 10 ist wieder durch Strömungspfeile 18 angedeutet.

Bedingt durch die Form der Windschutzscheibe 10 werden bei höheren Geschwindigkeiten des Fahrzeugs die Wischer 12 durch den Fahrtwind nach außen gedrückt. Die obere Endposition der Wischer 12 wird daher bei höheren Fahrzeuggeschwindigkeiten noch weiter nach außen verschoben.

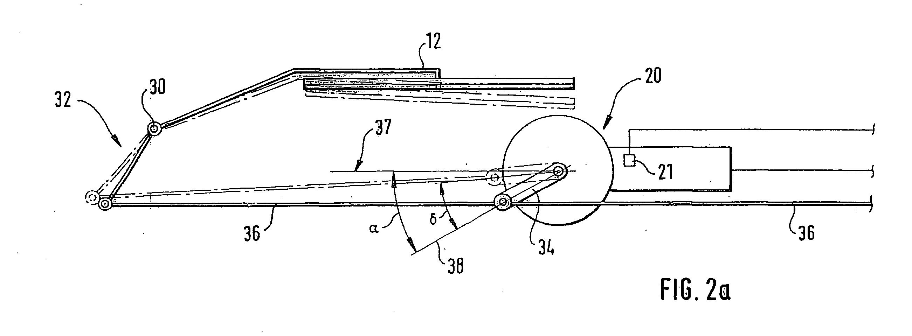

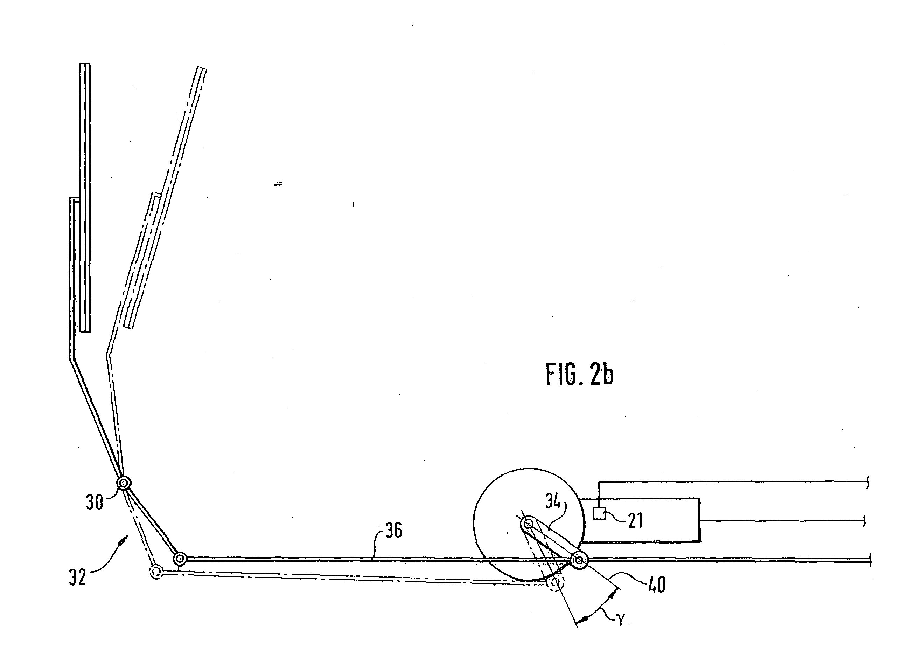

Figuren 2a und 2b zeigen ein Gestänge einer erfindungsgemäßen Scheibenwischvorrichtung in schematischer Darstellung.

In Fig. 2a ist eine Seite eines Wischergestänges in der unteren Endlage dargestellt. Die Wischerachse 30, an der der Wischer 12 befestigt ist, wird von der Schwingkurbel 32 bewegt, die vom Wischermotor 20 über die Kurbelstange 34 und die Schubstange 36 angetrieben werden. Da der Wischermotor 20 als Reversiermotor ausgebildet ist, kann er an beliebiger Position seine Drehrichtung und damit die Wischrichtung ändern.

Die durchgezogenen Linien zeigen das Wischergestänge bei ruhendem, neuem Fahrzeug in der unteren Endposition der Wischer 12. In dieser befindet sich auch der der Wischermotor 20 in einer unteren Reversierposition 38.

Die Reversierposition 38 ist dabei als der Drehwinkel α des Wischermotors 20 zu einer festen aber beliebigen Referenzlinie 37 zu verstehen, an dem die Laufrichtung des Wischermotors 20 im Betrieb umgekehrt wird. Aufgrund der Elastizitäten der Kurbelstange 34 ist deren Drehwinkel nicht zwangsweise mit dem Drehwinkel der Reversierposition identisch.

Mittels unterbrochener Linien ist das Wischergestänge im Fahrbetrieb bei einer älteren Scheibenwischvorrichtung angedeutet. Die Reversierposition 38 des Wischermotors 20 für die untere Endposition der Wischer 12 ist hier etwas verschoben, und zwar in der Richtung, daß der Wischer 12 auf einer tieferen Position umkehren würde. Auf Grund der Windströmung und des Schwingungsverhaltens der Wischer 12 wird sich dieser jedoch nie an dieser angedeuteten Position befinden, sondern immer in die gleiche, bei Fahrbetrieb im Regelfall höherliegende untere Endlage gedrückt werden.

Ähnlich wie in Fig. 2a ist auch in Fig. 2b das Wischergestänge dargestellt, wobei sich nun der Wischer 12 in der oberen Endlage 14 befindet.

Analog zur Fig. 2a zeigen die durchgezogenen Linien das Wischergestänge bei ruhendem Fahrzeug in der oberen Endposition 14 der Wischer 12. Hier befindet sich der Wischermotor 20 in der oberen Reversierposition 40.

Die unterbrochenen Linien zeigen das Wischergestänge im Fahrbetrieb bei einer älteren Scheibenwischvorrichtung. Die Reversierposition 40 des Wischermotors 20 für die obere Endposition 14 der Wischer 12 ist hier etwas nach innen verschoben. Durch das Überschwingen des Wischers 12, das durch die Windströmung noch verstärkt wird, wird der Wischer 12 jedoch immer in die obere Endlage 14 gerdrückt werden, da die Lagerspiele sich im Laufe der Zeit vergrößern.

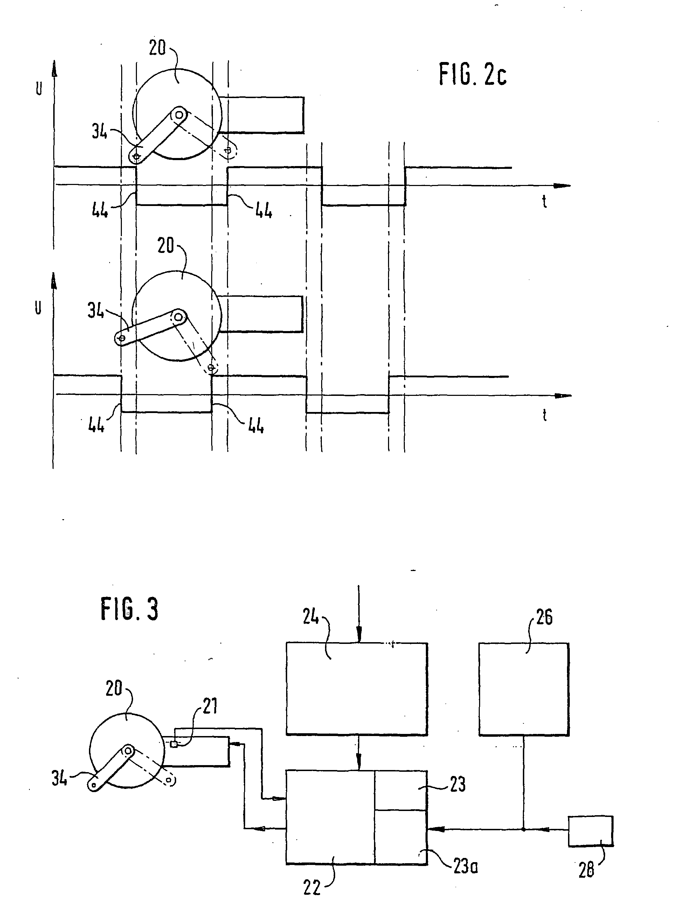

In Figur 2c ist sind zwei Diagramme dargestellt, in denen die am Wischermotor 20 anliegende elektrische Spannung über der Zeit aufgtragen ist. Das obere der beiden Diagramme entspricht einem Fahrzeug mit neuer Scheibenwischvorrichtung, das untere einem Fahrzeug mit älterer Scheibenwischvorrichtung, mit einer höheren Betriebsstundenzahl beziehungsweise mit einer höheren Anzahl von bereits durchgeführten Lastwechseln oder Wischzyklen.

Im wesentlichen entspricht die Spannungskennlinie einer Rechteckfunktion mit Flanken 44, jedoch kann diese Kurve durchaus auch einen anderen Charakter aufweisen.
An den Flanken 44 der Spannungskurve findet jeweils eine Umkehrung der Polung des Wischermotors 20 statt. Jede Flanke 44 entspricht daher jeweils der oberen oder unteren Reversierposition 38, 40. Zur Verdeutlichung wurde über jede Spannungskennlinie noch der Wischermotor 20 mit der Kurbelstange 34 eingezeichnet.

Der Vergleich der beiden Diagramme zeigt, daß bei steigender Lebensdauer des Fahrzeugs, der Wischermotor 20 an früheren Zeitpunkten reversiert, jedoch können diese Zeitpunkte beliebig, nach Bedarf eingestellt werden.

Die Kurbelstange 34 wird dadurch an anderen Positionen reversiert, was sich über das übrige Gestänge auf die Wischer 12 auswirkt. Die Verschiebungen der Reversierpositionen 38, 40 des Wischermotors 20 sind gerade groß vorgesehen, daß von den Wischern 12 trotzdem in den selben Endpositionen umgekehrt wird.

In Fig. 3 ist eine schematische Darstellung einer erfindungsgemäßen Scheibenwischvorrichtung gezeigt. Der Wischermotor 20, der typischerweise als elektronisch reversierbarer Elektromotor ausgebildet ist, wird von einer Steuerelektronik 22 gesteuert.

Der Wischermotor 20 ist dabei mit einem Positionssensor 21 versehen, der beispielsweise als Hallsensor ausgebildet ist, und dessen Signale an die Steuerelektronik 22 vermittelt werden. Durch den Positionssensor 21 und die Steuerelektronik 22 kann der Wischermotor 20 derart angesteuert werden, daß beliebige Positionen der Wischer 12 jederzeit angefahren werden können. Auf diese Weise ist es möglich, die Drehrichtung des Wischermotors 20 durch Umpolung der Eingangsspannung umkehren zu lassen und damit die Reversierpositionen 38, 40 des Wischermotors 20 frei zu wählen.

Die Steuereinrichtung 22 erhält Signale, die ein Maß für den Verschleiß der Scheibenwischvorrichtung sind. Dies können beispielsweise Signale eines Wischzykluszählers oder eines Zeitmessers sein, der die Betriebs- oder Lebensdauer der Scheibenwischvorrichtung mißt. Weiterhin erhält die Steuereinrichtung 22 Signale des Bedienhebels 26 der vorzugsweise als Lenkstockschalter ausgebildet ist. Selbstverständlich können auch weitere Signale wie beispielsweise die eines Regensensors 28 der Steuereinrichtung 22 zugeführt werden und in die Verarbeitung mit einfließen. Dazu weist die Steuereinrichtung 22 eine Speichereinrichtung 23 und eine Rechnereinheit 23a auf.

Im folgenden wird die Funktion der erfindungsgemäßen Wischanlage erläutert.

Bei einem neuen Fahrzeug reversieren die Wischer 12 zwischen der oberen und der unteren Endlage. Diesen Endlagen entsprechen bei stehendem Fahrzeug eine bestimmte Reversierpositionen des Wischermotors 20. Da sich - wie in Figur 1a erläutert - die Endpositionen der Wischer 12 durch die Elastizitäten im Wischsystem und durch die Spiele in den Lagern mit steigendem Alter nach oben verschieben würden, werden erfindungsgemäß die Reversierpositionen des Wischermotors 20 derart verschoben, daß die Endpositionen der Wischer 12 über die Lebensdauer der Scheibenwischvorrichtung hinweg konstant bleiben.

Da der Wischer 12 bei größer werdenden Lagerspielen weiter nach oben gedrückt wird, bewegt der Wischermotor 20 den Wischer 12 weiter nach unten, gerade soweit, dass die Endposition des Wischers 12, in der er umkehrt, konstant bleibt. Die Kurbelstange 34 wird dazu vom Wischermotor 20 weiter ausgelenkt als dies bei einem neuen Fahrzeug notwendig wäre, das heißt, daß mit steigendem Alter des Fahrzeugs die untere Reversierposition 38 des Wischermotors 20 weiter nach oben oder unten verschoben wird und zwar gerade so, daß ein Verschieben der Endposition des Wischers 12 vermieden wird.

Umgekehrt dazu werden die Wischer 12 in der oberen Endposition bei älteren Fahrzeugen durch das Überschwingen weiter nach außen gedrückt. Um dies zu kompensieren wird die obere Reversierposition 40 nach innen verschoben. Das heißt, daß die Kurbelstange 34 vom Wischermotor 20 weniger weit ausgelenkt wird als dies bei einem neuen Fahrzeug der Fall ist.

Auf diese Weise werden die Elastizitäten und die vergrößerten Lagerspiele eines älteren Wischsystems ausgeglichen, wodurch der Wischer 12 selbst auf der Windschutzscheibe 10 immer in den selben Endpositionen reversiert.

In Figur 2a ist das Wischergestänge 32, 34, 36 in der unteren Reversierposition 38 bei einem neuen Fahrzeug mittels durchgezogenen Linien, bei einem älteren Fahrzeug durch unterbrochene Linien Wischergestänge 32, 34, 36 dargestellt. Bei älteren Fahrzeugen wird also die untere Reversierposition 38 um den Winkel δ verschoben.

In Figur 2b ist die obere Reversierposition 40 bei einem älteren Fahrzeug mittels unterbrochener Linien, bei einem neuen Fahrzeug mittels durchgezogener Linien des Wischergestänges 32, 34, 36 dargestellt. Analog zu Figur 1a wird hier bei älteren Fahrzeugen die obere Reversierposition 40 um den Winkel γ verschoben.

## Patentansprüche

1. Scheibenwischvorrichtung, insbesondere für ein Kraftfahrzeug, mit mindestens einem zwischen zwei Endpositionen pendelbar gelagerten Wischer (12), der durch einen Elektromotor (20) antreibbar ist, **dadurch gekennzeichnet, daß** der Elektromotor als reversierbarer Elektromotor (20) ausgebildet ist, daß die beiden Endpositionen des Wischers (12) und damit der von diesen eingeschlossene Pendelwinkel (16) von Reversierpositionen (38, 40) des Elektromotors (20) bestimmt ist und daß mindestens eine Reversierposition (38, 40) des Elektromotors (20), verschleißabhängig einstellbar ist.

2. Scheibenwischvorrichtung nach Anspruch 1, **dadurch gekennzeichnet, daß** eine Steuereinrichtung (23) vorgesehen ist, die bei jedem Wischzyklus einen Wert (W) als Verschleißinformation zählt, insbesondere inkrementiert und die Reversierposition (38, 40) des Elektromotors (20) in Abhängigkeit des Wertes (W) festsetzt.

3. Scheibenwischvorrichtung nach einem der Ansprüche 1 oder 2, **dadurch gekennzeichnet, daß** eine Steuereinrichtung (23) mit einem Zeitmesser (24) vorgesehen ist, welche die Reversierposition (38, 40) unter Berücksichtigung des Wertes des Zeitmessers (24) als Verschleißinformation bestimmt.

4. Scheibenwischvorrichtung nach einem der Ansprüche 2 oder 3, **dadurch gekennzeichnet, daß** eine, bei fehlender Verschleißinformation ausgelöste Notbetriebsstufe vorgesehen ist, in der die Reversierpositionen (38, 40) fest eingestellt sind.

5. Scheibenwischvorrichtung nach einem der vorhergehenden Ansprüche, **dadurch gekennzeichnet, daß** mindestens eine Reversierposition in Abhängigkeit der Wischgeschwindigkeit, insbesondere der Wischstufe einstellbar ist.

6. Scheibenwischvorrichtung nach einem der vorhergehenden Ansprüche, **dadurch gekennzeichnet, daß** mindestens eine Reversierposition in Abhängigkeit der Fahrzeuggeschwindigkeit einstellbar ist.

7. Scheibenwischvorrichtung nach einem der vorhergehenden Ansprüche, **dadurch gekennzeichnet, daß** die Scheibenwischvorrichtung einen Regensensor (28) aufweist.

8. Scheibenwischvorrichtung nach einem der vorhergehenden Ansprüche, **dadurch gekennzeichnet, daß** die Reversierpositionen um einen Winkel von 0 bis 20°, insbesondere 0 bis 12°, verstellbar sind.

9. Scheibenwischvorrichtung, insbesondere für ein Kraftfahrzeug, mit mindestens einem zwischen Endpositionen pendelbar gelagerten Wischer (12), der von einem durch eine Steuereinrichtung (23) beeinflußbaren Antrieb (20) antreibbar ist, **dadurch gekennzeichnet, daß** die Steuereinrichtung (23) die Endpositionen dem Antrieb (20) verschleiß- und/oder alterungsabhängig vorgibt.
